# EUROPEAN PATENT SPECIFICATION

(11) **EP 3 382 214 B1**
(45) Date of publication and mention of the grant of the patent: **14.10.2020**
(21) Application number: 18163211.8
(22) Date of filing: 21.03.2018
(51) Int. Cl.: F16B 13/08

(54) **A FIXING, KIT, AND METHOD**
BEFESTIGUNG, KIT UND VERFAHREN
KIT DE FIXATION ET PROCÉDÉ

(30) Priority: 30.03.2017 GB 201705109; 08.12.2017 GB 201720501
(43) Date of publication of application: 03.10.2018
(73) Proprietor: Nugent, Simon, Birmingham, West Midlands B37 7LZ (GB)
(72) Inventor: Nugent, Simon, Birmingham, West Midlands B37 7LZ (GB)
(74) Representative: Sessford, Russell

(56) References cited:
- WO-A1-00/25030
- US-A1- 2003 127 578
- US-A1- 2012 056 051

## Description

### Description of Invention

Embodiments of the present invention relate to a fixing for attaching an object to a panel, a kit including the fixing, and a method for using the fixing. In particular, some embodiments relate to a plasterboard fixing, kit, and associated method.

It is often necessary to secure another object to a panel. For example, many modern buildings include internal walls which are constructed using plasterboard (also known as drywall). Such walls typically comprise sheets of gypsum-based material supported by wooden battens.

In many such buildings there is a desire to secure objects to the internal walls. These objects can be relatively light (e.g. decorative objects such as pictures) or may be relatively heavy (e.g. internal fittings and fixtures such as cupboards and radiators).

An array of different fixings has been developed for different objects and object types, for use with plasterboard walls. These fixings include wall plugs (sometimes called screw anchors or Rawlplugs^{(RTM)}) formed of plastic material such as nylon. To use such a fixing, a hole is drilled in the plasterboard, the wall plug is then inserted into the hole, and a suitable screw inserted into the wall plug (e.g. through at least part of the object to be secured to the wall). The screw causes expansion of the wall plug to grip the plasterboard. However, because the plasterboard is relatively thin, such wall plugs will typically include one or more resilient arms which are configured to be in a retracted state to allow the wall plug to be inserted. These arms then move outwardly to engage a rear of the plasterboard once inserted.

Other fixings include self-tapping threaded plastic plugs which can be engaged with the plasterboard and rotated into a secure position before, in turn, receiving a screw.

Such fixings, however, are only suitable for relatively lightweight objects because the weight of the object is supported by a relatively small area of plasterboard - which is prone to break as a result.

Attempts have been made to provide fixings which can secure heavier weight objects to plasterboard. These include, for example, the fixing disclosed in GB2526892 which comprises a tongue of metal which can be bent and inserted through a hole in the plasterboard to form an n-shape - with the legs of the n-shaped fixing being adjacent opposing sides of the plasterboard. A screw can then be passed through the two legs of the fixing. However, such fixings are difficult to secure to a plasterboard wall reliably - alignment of the two legs is difficult and ensuring the screw correctly engages both legs is also difficult. Furthermore, correct securing of the fixing to the wall may be difficult to determine - as one side is typically hidden from view.

Another fixing can be seen in GB2484771. This fixing can be inserted into a drilled hole in a plasterboard wall and then actuated to extend wings on a rear side of the plasterboard. Such a fixing does not spread the weight of the object to be attached to the wall over a large part of the plasterboard and includes multiple moving parts. The fixing is, therefore, relatively expensive to manufacture.

Whilst the above fixings are typically used with plasterboard, this is just one example of a panel to which one or more objects may need to be attached. Similar issues arise in relation to other panels including, for example, wooden panels which may be used in the construction of furniture.

WO00/25030A1 teaches a hook and anchor assembly for use with hollow panels such as walls and ceilings made of gypsum, comprising an anchor having first and second sections, a hook adapted to be secured to the anchor and to abut a visible surface of the hollow wall. The anchor is adapted to be engaged to the hollow wall such that its second section is located behind the wall with the first section extending through a hole defined in the wall. The hook has a wall-engaging flange. The hook and the first section of the anchor are provided with adjustable cooperating threads for connecting them together while allowing for various relative positions therebetween, whereby the distance between the second section and the wall engaging flange may be varied such that the second section and the wall engaging flange act as a vice on the wall for tightly installing the anchor and the hook thereon. Also, the anchor may comprise successive first and second sections having different threads with the first section being adapted to be engaged in a wooden member and with the hook being adapted to be engaged to the second section such as to abut the wooden member.

US2012/056051A1 teaches a fastener assembly for mounting an object on a wall, including a substantially planar member having at least one ledge extending substantially perpendicular therefrom, the member being configured to permit at least a portion of the planar member to lie flush against the wall, with the ledge inserted at least partially through the wall.

US2003/127578A1 teaches a hanger device in an assembly of a clip and a support member for installation upon a wallboard. The clip is formed as one piece, having an upturned arm, a downwardly turned leg, and a horizontally oriented extension member connecting the two together. A hook is mounted on leg and a pointed end is mounted on the terminal end of arm. An opening is formed in support member so as to mate geometrically to the rectangular cross section of extension member to prevent turning of clip after installation of device in wallboard. A plurality of spaced-apart apertures are provided in support member for insertion of fasteners to attach support member to wallboard and thus device.

There is, therefore, a need to provide a fixing which alleviates one or more problems associated with the prior art.

Accordingly, an aspect of the invention provides a fixing for attaching an object to a panel, the fixing comprising: a head member configured to be located on a first side of the panel; a back member configured to be located on a second side of the panel and to receive at least part of an attachment element; and a neck member connecting the head member and the back member, wherein the head member, neck member, and back member are rigidly coupled together and a part of the back member extends radially outwardly with respect to the head member, such that the back member is locatable on the second side of the panel by manipulation of the rigidly coupled head member, neck member and back member, wherein the back member defines a plurality of apertures.

The head member may have a central axis which passes through at least part of the neck member and the part of the back member which extends radially outwardly with respect to the head member may extend radially outwardly with respect to the central axis.

The central axis may pass through at least part of the back member.

The head member may be a disc-shaped member.

The head member may include a visual indicator which indicates the direction of extension of the part of the back member.

The neck member may include an angled surface on a part which opposes the direction of extension of the back member.

The back member may include an angled surface on a part which is adjacent the neck member.

The or each aperture may extend through the back member along a respective axis which is generally parallel to a central axis of the head member.

The apertures may be defined in an array including one or more columns of apertures.

The apertures may form a lattice or honeycomb-like structure.

The neck member may include one or more support ribs.

The fixing may further include a linear motion device which is configured to provide linear movement between the head member and the back member

The back member may include a curved portion connecting the rest of the back member to the neck member.

Another aspect provides a kit including a fixing and the attachment element.

The attachment element may be a threaded attachment element.

The kit may further include a drill bit for use in creating a hole in the panel to receive the fixing.

The kit may further include the object.

Another aspect provides a method including: inserting the fixing into a hole defined by the panel; and rotating the fixing to bring a face of the back member towards a surface of the panel and to bring the head member to cover the hole at least partially.

The method may further include driving the attachment element into the back member.

Embodiments of the present invention are described, by way of example, with reference to the accompanying drawings, in which:
Figure 1 shows a front view of a fixing;
Figure 2 shows a rear view of a fixing;
Figure 3 shows a side, perspective, view of a fixing;
Figure 4 shows a step in the use of a fixing;
Figure 5 shows a step in the use of a fixing;
Figure 6 shows a step in the use of a fixing;
Figure 7 shows a step in the use of a fixing;
Figure 8 shows a panel with a hole;
Figure 9 shows a panel with an attached fixing;
Figure 10 shows a front view of a fixing;
Figure 11 shows a side view of a fixing;
Figure 12 shows a side view of a fixing;
Figure 13 shows a side view of a fixing; and
Figure 14 shows a side view of a fixing.

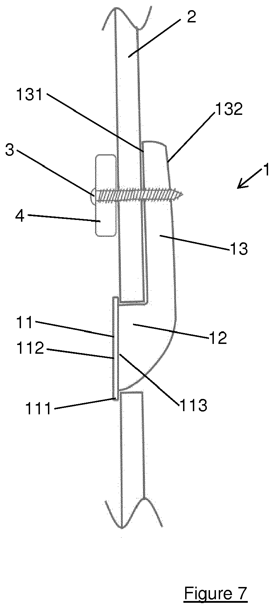

Embodiments include a fixing 1 for attaching an object 4 to a panel 2 - see figure 7. Note that the object 4 is shown for schematic purposes only and could take a number of different forms. The panel 2 may, for example, be plasterboard and so the fixing 1 may be a plasterboard fixing 1. The panel 2 may, for example, be wood and so the fixing may be a wood panel fixing 1.

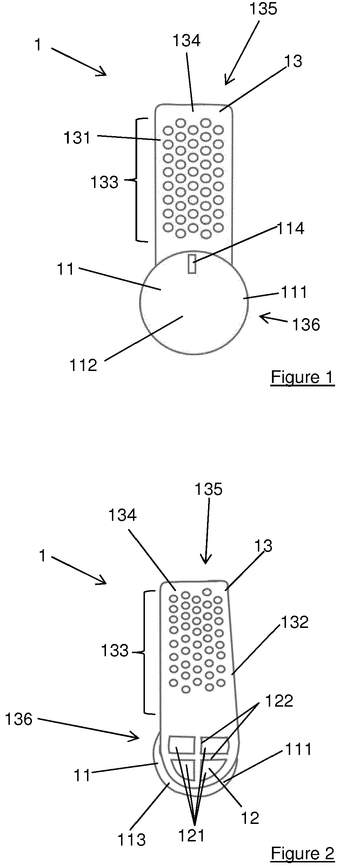

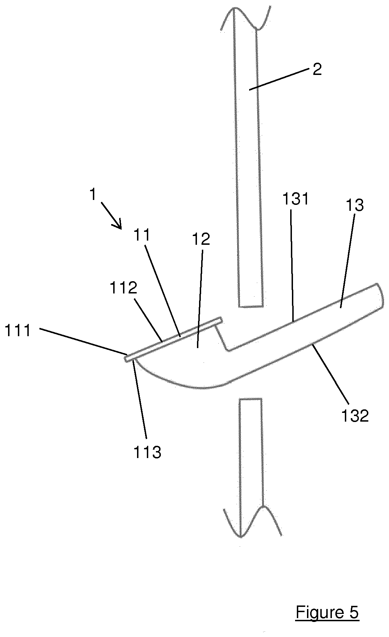

Examples of the fixing are described with reference to figures 1-7. It will be appreciated that the dimensions of the fixing are dependent on a thickness of the panel 2 and the weight of the object 4 to be attached, and the figures are to be interpreted accordingly - the panel thickness being for example only.

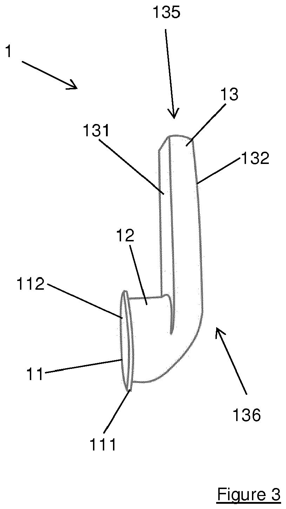

The fixing 1 includes a head member 11, a neck member 12, and a back member 13 - best seen in figure 3, for example.

In some embodiments, the head member 11, neck member 12, and back member 13 are integrally formed. In some embodiments, the head member 11, neck member 12, and back member 13 are formed of plastic. In some embodiments, the head member 11, neck member 12, and back member 13 are moulded as a single piece. The head member 11, neck member 12, and back member 13 are rigidly coupled to each other (and/or integrally formed). In other words, rotational movement of the head member 11 with respect to the back member 13 is substantially prevented (and rotational movement of the neck member 12 with respect to the head member 11 and/or the back member 13 may also be substantially prevented).

Accordingly, in some embodiments, the head member 11, neck member 12, and back member 13, may equally be referred to as a head portion 11, neck portion 12, and back portion 13 respectively - all being portions or parts of the fixing 1.

The back member 13 is configured to be located, when the fixing 1 is attached to the panel 2, adjacent a rear surface (i.e. second surface) of the panel 2 (the first or front surface of the panel 2 opposing the second surface across the thickness panel 2). Accordingly, a first face 131 of the back member 13 may be configured, when the fixing 1 is attached to the panel 2, to be immediately adjacent the panel 2 (e.g. the rear surface thereof). A second face 132 of the back member 13 opposes the first face 131 across a depth of the back member 13.

The back member 13 is configured to receive a portion of a screw 3 (e.g. a threaded portion) or other attachment element. Accordingly, the back member 13 may be formed from a material which can be punctured by the portion of the screw 3 or other attachment element. The back member 13 defines apertures 133. At least one of the apertures 133 is configured to receive the portion of the screw 3 or other attachment element. As will be appreciated, a screw 3 is an example of an attachment element and, in particular, of a threaded attachment element. Other forms of attachment element may not be threaded and an attachment element could, for example, be a rivet-type attachment element.

The back member 13 defines a plurality of such apertures 133 - see figures 1 and 2, for example. These apertures 133 may be defined in an array and the apertures 133 may be arranged in rows and columns. In some embodiments, such as the depicted embodiment, there may be a plurality of apertures 133 which are arranged in columns, wherein two adjacent columns are offset with respect to each other along a length of the back member 13 - e.g. such that a honeycomb-like structure is provided.

In some embodiments, a substantial part of the back member 13 defines such apertures 133.

In some embodiments, the apertures 133 are defined by a lattice structure of the back member 13. The lattice structure may be formed from a plurality of intersecting elements which may extend perpendicular to each other - in a plane of the back member 13. In such embodiments, the intersecting elements may be arranged diagonally across the back member 13.

Providing a plurality of apertures 133 may permit at least one aperture to receive part of the screw 3 (or other attachment element) and for parts of the back member 13 to be pressed away from the screw 3 (or other attachment element) without splitting the back member 13 or with reduced splitting of the back member 13. Accordingly, precise alignment of the screw 3 (or other attachment element) with an aperture of the plurality of apertures 133 may not be required - as the structure of the back member 13 may distort to accept the screw 3 (or other attachment element).

The fixing 1 depicted in figure 3, for example, does not include such apertures 133 but apertures 133 may equally be provided in this fixing 1 too.

The back member 13 may include an outer wall 134 around at least part of a perimeter of the back member 13. In some embodiments, the outer wall 134 extends between the first and second faces 131,132, through the depth of the back member 13. The outer wall 134 may extend around parts of the back member 13 from which the neck member 12 does not extend. In some embodiments, the outer wall 134, however, may extend around substantially the entire back member 13.

The outer wall 134 may be configured to provide structural support for the back member 13 and/or reduce the risk of an outer part of the back member 13 splitting when the back member 13 receives the screw 3 (or other attachment element). In other words, the outer wall 134 may provide a reinforced perimeter for the back member 13.

The back member 13 may have a distal end 135 which is the end of the back member 13 which is most remote from the neck member 12. The back member 13 may have a proximal end 136 which is the end of the back member 13 which is adjacent the neck member 12.

The back member 13 has a length between the distal end 135 and the proximal end 136, and a width between two opposing sides of the back member 13.

The proximal end 136 of the back member 13 may include an angled surface (angled with respect to the length and depth of the back member 13). This angled surface at the proximal end 136 may form a chamfer, bevel, or fillet between the second face 132 and the neck member 12.

Accordingly, in some embodiments, the neck member 12 extends generally away from the back member 13. The neck member 12 may extend in a direction generally perpendicular to the plane of the back member 13.

In some embodiments, the neck member 12 has a generally circular cross-sectional shape - although other shapes are possible (such as square, rectangular, or oval).

A width of the neck member 12 may be substantially equal to the width of the back member 13. A diameter or height of the neck member 12 may be defined generally in a direction corresponding with the length of the back member 13.

In some embodiments, the neck member 12 includes an angled surface which may form a chamfer, bevel, or fillet from a part of the neck member 12 adjacent the head member 11 towards a part of the neck member 12 adjacent the back member 13. This angled surface may form a generally continuous surface with the angled surface of the back member 13.

The angled surface of the neck member 12 may be located on a part of the neck member 12 which opposes the direction of extension of the back member 13.

The angled surface of the neck member 12 and/or the back member 13 may define one or more recesses 121. In particular, the relevant part of the neck member 12 and/or the back member 13 may include one or more rib elements 122 and the one or more recesses 121 may be defined between the or each rib element 122 and/or another part of the fixing 1. The or each rib element 122 may be provided in at least one cross formation - with at least one rib element 122 intersecting another (e.g. at right angles). The or each rib element 122 may be configure to provide additional strength and/or rigidity to the fixing 1. In some embodiments, outer surface or surfaces of the or each rib element 122 generally follow the angled surface of the neck member 12 and/or back member 12 - i.e. the or each rib element 122 may follow the profile of that part of the rest of the fixing 1.

The head member 11 may be located at an end of the neck member 12 which is remote from the back member 13. The head member 11 may, therefore, oppose the back member 13 across a depth of the neck member 12.

The head member 11 has a width and a diameter or height. At least one of the width and the height of the head member 11 is greater than the width or height, as the case may be, of the neck member 12.

The head member 11, in some embodiments, is in the form of a flange 111 which extends from the neck member 12 in a plane generally perpendicular to the depth of the neck member 12 and generally parallel with the plane of the back member 13.

The head member 11 may, therefore, be in the form of a disc.

The head member 11 may have a relatively small depth.

In some embodiments, the head member 11 has a generally circular cross-sectional shape - although other shapes are possible (such as square, rectangular, oval, ellipse, drop-shaped or pear-shaped). The neck member 12 may include at least a part which is the same cross-sectional shape as the head member 11. That part of the neck member 12 may be the part which is adjacent the head member 11.

The head member 11 may, therefore, have an outer surface 112 and an inner surface 113 (the depth of the head member 11 being defined between the outer and inner surfaces 112,113).

The depth of the neck member 12 (between the inner surface 113 of the head member 11 and the first face 131 of the back member 13) is generally equal to or marginally greater than the depth of the panel 2.

Once fitted to the panel 2, the fixing 1 of embodiments is configured such that the back member 13 is located at the rear of the panel 2 and the head member 11 may be located towards the front of the panel 2, with the neck portion 12 extending through the panel 2.

In order to attach the fixing 1, a user may drill or otherwise form a hole 5 through the panel 2. The hole 5 may be generally circular in shape, for example, or may otherwise have a shape corresponding with the cross-sectional shape of the neck member 12. In some embodiments, the hole 5 is sized and shaped (i.e. configured) to circumscribe the neck member 12 when the neck member 12 is received (or partially received) by the hole 5. One or more edges or corners of the neck member 12 on generally opposing parts of the neck member 12 may, therefore, be configured with respect to each other such that they abut one or more edges of the panel 2 which define the hole 5. Accordingly, in some embodiments, lateral movement (in the plane of the panel 5) of the fixing 1 with respect to the panel 2 may be generally restricted or substantially prevented by abutment of the neck member 12 and the one or more edges of the panel 2 which define the hole 5.

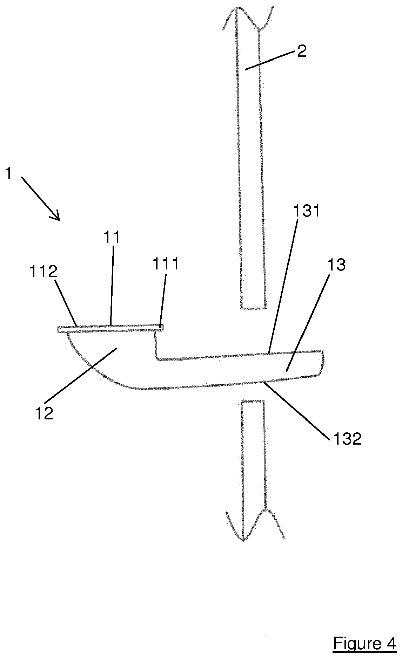

With reference to figures 4-7, 8 and 9, the back member 13 may be inserted through hole 5 and then rotated such that the back member 13 is positioned adjacent the panel 2 and the outer surface 112 of the head member 11 is generally parallel with an outer surface of the panel 2 (i.e. so that the head member 11 at least partially covers the hole 5). With reference to figure 7, the screw 3 (or other attachment element) may then be driven through the panel 2 and into the back member 13 - e.g. also through the object 4 to be secured to the panel 2.

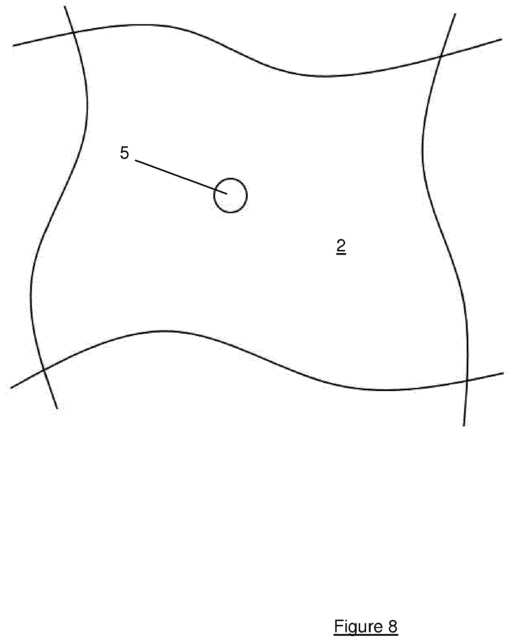

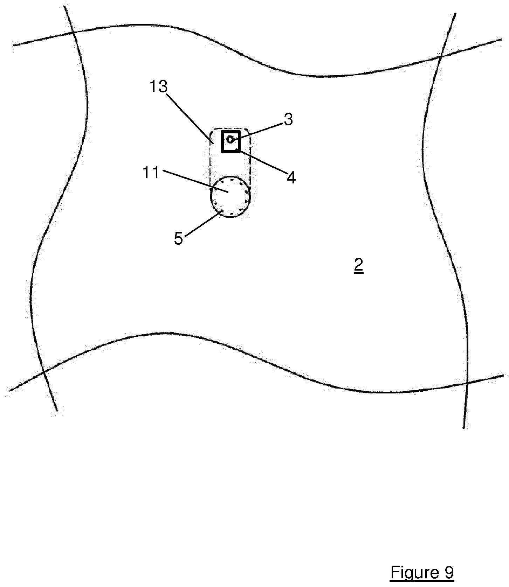

Figure 8, therefore, shows a panel 2 defining a hole 5. Figure 9 shows the panel 2 of figure 8 to which the fixing 1 has been attached with a schematic view of an object 4 (as an example for understanding only). In figure 9 the hole 5 is generally covered by the head member 11; therefore, the hole is depicted in broken lines. Similarly the back member of the fixing 1 is behind the panel 2 relative to the view in the figure and so this is also depicted in broken lines.

The angled surface or surfaces of the neck member 12 and/or back member 13 may, in some embodiments, assist in enabling the fixing 1 to be rotated into place through the hole 5.

As will be appreciated the screw 3 (or other attachment element) may be driven into the back member 13 without passing through the head member 11. Accordingly at least part of the back member 13 is not aligned with the head member 11. In other words, at least part of the back member 13 extends radially away from the head member 11 (the back member 13 may be offset along an axis which passes through at least part of the head member 11, the neck member 12, and the back member 13). In some embodiments, a central axis of the head member 11 may pass through the centre of the head member 11 substantially perpendicular to a plane of the outer surface 112 of the head member 11. That central axis may pass through part of the neck member 12 and may pass through at least part of the back member 13. In some embodiments, the head member 11 and back member 13 are offset with respect to each other along this central axis (with the neck member 12 extending between the other two members 11,13). At least a part of the back member 13 may extend radially away from this central axis a greater distance than the extension of the head member 11 in the same radial direction. In other words, a part of the back member 13 extends radially outwardly with respect to an axis of the head member 11.

As will be appreciated, with reference to figures 4-6, rotation of the fixing 1 into place with respect to the panel 2, may include rotation about an axis which is generally perpendicular to the central axis of the head member 11 and the direction of extension of the back member 13 from the neck member 12. In other words, this axis of rotation may extend across a width of the fixing 1 (and may intersect the neck member 12). As the fixing 1 may also be moving in a linear manner with respect to the panel 2 during attachment, the axis of rotation may move relative to the panel 2 during this process.

In some embodiments, the head member 11 is provided with a visual indicator 114 which indicates the location of the back member 13 - such that the location of the back member 13 can be determined even after the back member 13 is located behind the panel 2. The visual indicator 114 may be in the form of a recess or an embossed part of the head member 11. In some embodiments, the visual indicator 114 is printed onto the head member 11. In some embodiments, the visual indicator 114 is adhered to the head member 11 - e.g. as a label. The visual indicator 114 may be provided on the outer surface 112 of the head member 11. In another embodiment, the visual indicator 114 may be defined in the shape of the head member 11 (e.g. by an external shape thereof such as in may be the case in relation to a drop- or pear-shaped head member 11.

The outer surface 112 of the head member 11 may include one or more decorations and/or logos (e.g. embossed, moulded, engraved, or adhered to the surface 112). In some embodiments the outer surface 112 is paintable and may include a coating, covering, or other treatment to promote the adhesion of paint to the outer surface 112.

Different sizes of fixing 1 may be provided for use with different panels 2. In particular, the depth of the neck member 12 may be configured for a particular depth of panel 2 and different fixings 1 (with different depths of neck member 12) may be provided for different panel 2 depths.

The configuration of the fixing 1 helps to distribute the forces applied to the fixing 1 by the weight of the object 4 across a relatively large area of the panel 2. The length of the back member 13 helps to distribute these forces. The relatively large width of the neck member 12 distributes some of the forces through a relatively large width of the panel 2.

Whilst embodiments have generally been described for use in relation to the panel 2 comprising plasterboard, it will be appreciated that embodiments may be used with outer forms of panel 2. In some instances, the user may not need to create the hole 5 in the panel 2 and the hole 5 may be pre-formed.

The fixing 1 may be formed of a metal in some embodiments - such as steel, aluminium, or tin.

In some embodiments, a pack of fixings 1 may be provided of different sizes.

Some embodiments include the method of attaching the fixing 1 to the panel 2 and/or attaching the object 4 to the panel 2 using the fixing 1.

As will be appreciated, embodiments can also be removed in a relatively straightforward manner - by reversing the attachment method steps. Some embodiments, therefore, include this removal method.

Some embodiments include no moving parts in the fixing 1 and so is simple to manufacture and can be reliably used - with reduced risk of malfunction or incorrect use.

Embodiments may include a kit which includes the fixing 1 and the attachment element 3 (e.g. the screw 3). The kit may include a drill bit for use in forming the hole 5 in the panel 2. The kit may also include the object 4.

The object 4 could be a bracket, shelf bracket, a cupboard, a picture, a television mount, or the like.

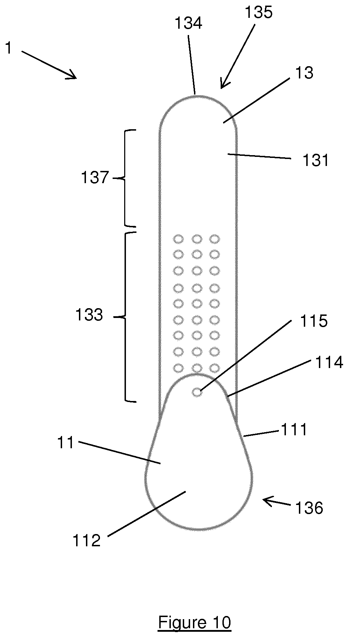

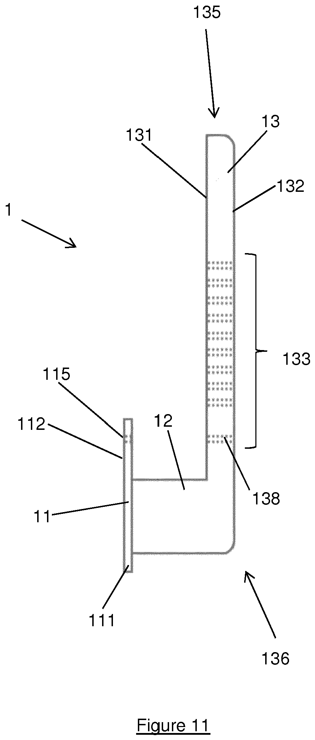

Some embodiments of the fixing 1 may include a first securing indicator 115 (see figures 10 and 11, for example). The first securing indicator may be an aperture defined by the head member 11, or may be in the form of a recess or an embossed part of head member 11, or may be printed or adhered to the head member 11.

The first securing indicator 115 may define a part of the head member 11 through which an attachment element (such as a screw) may be driven such that the attachment element is also at least partially received by the back member 13. The attachment element, in this instance, may be longer than the depth of the neck member 12. As will be appreciated, the attachment element may also pass through a part of the panel 2 received between the head member 11 and the back member 13.

Accordingly, in some embodiments, the first securing indicator 115 may be configured to receive a portion of the attachment element.

A second securing indicator 138 may be provided in relation to the back member 13. In some embodiments, the second securing indicator 138 may be an aperture or recess defined by the back member 13.

The second securing indicator 138 may be configured to receive a portion of the attachment element which is driven through the head member 11 (e.g. through the first securing indicator 138).

Therefore, the second securing indicator 138 may be in general coaxial alignment with the first securing indicator 115, if provided.

In some embodiments, the respective diameters or widths of the first securing indicator 115 and second securing indicator 138 may be different from the apertures 133 and/or from each other.

In some embodiments, there may be a plurality of first securing indicators 115. In some such embodiments, there may be a corresponding plurality of second securing indicators 138 - e.g. with the first and second securing indicators 115,138 arranged in pairs (which may be coaxial pairs).

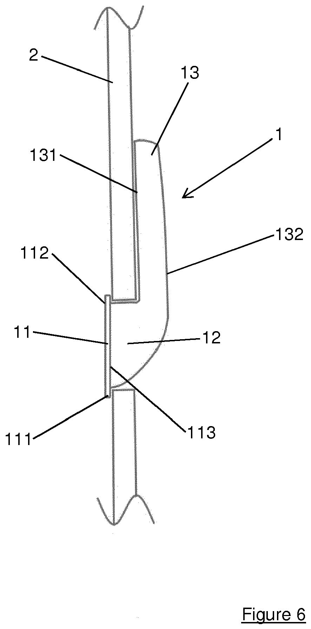

Therefore, when the fixing 1 is secured to the panel 2, after positioning with respect to the panel 2 (as in figure 6, for example), an attachment element may be driven through the first securing indicator 115 and into the back member 13 (e.g. into the second securing indicator 138). Accordingly, the first securing indicator 115 may first receive a portion of the attachment element, and the second securing indicator 138 may receive a second portion of the attachment element.

This arrangement may help to keep the fixing 1 in place with respect to the panel 2 as the screw 3 (or other attachment element) is driven into the back member 13 as depicted, for example, in figure 7. In other words, this arrangement may help to restrict rotation of the back member 13 away from the panel 2 as the screw 3 (or other attachment element) is driven into the back member 13.

In some embodiments, a portion of the head member 11 may extend radially away at a greater distance from the central axis of head member 11 than another portion of head member 11. This may form, for example, an oval, elliptical, drop-shaped or pear-shaped cross-section head member 11. The direction of greater radial extension of the head member 11 may be in the same direction as the direction of extension of the back member 13. The first securing indicator 115 may be this extension or may be provided on or through this extension.

With reference to figures 10-12, for example, the back member 13 of some embodiments may include a further extension portion 137. The further extension portion 137 may be at or towards the distal end 135 of back member 13. The further extension portion 137 may include a uniform surface across the first face 131 and the second face 132. The further extension portion 137 may have a substantially uniform thickness. Therefore, the further extension portion 137 may not include the apertures 133.

In some embodiments, the further extension portion 137 may be configured to receive the screw 3 or other attachment element. The screw 3 (or other attachment element) may be of a diameter or width that is different from the apertures 133, but less than the width of back member 13. Accordingly, in some embodiments, the screw 3 or other attachment element may form an aperture (which receives a portion of the scew 3 or other attachment element) in the further extension portion 137 as the screw 3 (or other attachment element) is driven into the further attachment element. The thickness of the further extension portion 137 may be sufficient such that a threaded screw 3 or other attachment element can be securely driven into the further extension portion 137.

In some embodiments, the back member 13 may include a plurality of sections, like the further extension portion 137, which do not include the apertures 133 and at least one portion which does include the apertures 133 (of course, some described fixings 1include a back member 13 with no such apertures 133).

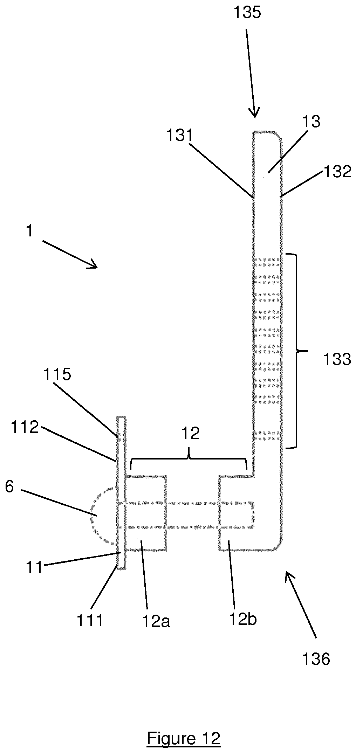

With reference to figure 12, for example, in some embodiments the neck member 12 may include a first neck section 12a and a second neck section 12b. The first neck section 12a may be rigidly coupled to the head member 11 and the second neck section 12b may be rigidly coupled to the back member 13. The first neck section 12a may be integrally formed with the head member 11 and the second neck section 12b may be integrally formed with the back member 13.

Accordingly, in some embodiments, the head member 11 and first neck section 12a may form a first section of the fixing 1 whilst the back member 13 and second neck section 12b may form a second section of the fixing 1.

The first and second sections of the fixing 1 may be moveable with respect to each other. The first and second sections of the fixing 1 may be coupled to each other and that coupling may allow movement (which may be linear movement) between the first and second sections of the fixing 1.

In some embodiments, the first neck portion 12a may move in respect to the second neck portion 12b along or in the direction of (e.g. along a parallel axis) the central axis that passes through at least part of the neck member 12.

The first and second sections of the fixing 1 may be coupled together by a linear motion device 6. The linear motion device 6 may be a threaded member such as a leadscrew. The linear motion device 6 may be a linear slide.

In some embodiments, the linear motion device 6 may be smaller in diameter or width than the diameter or width of neck member 12. The linear motion device 6 may extend through at least part of the neck member 12 (e.g. along the central axis thereof or a parallel axis).

The linear motion device 6 may be configured to engage at least a portion of the first and second sections of the fixing 1 (e.g. at least a portion of first neck portion 12a and the second neck portion 12b).

The linear motion device 6 may be configured to be actuated between extended and retracted configurations. In the extended configuration the distance between the head member 11 and the back member 13 is greater than when in the retracted configuration. Accordingly, such embodiments, may be used to accommodate different thicknesses of panel 2.

The first and second sections of the fixing 1, in some such embodiments, may include inter-engaging formations which generally allow linear movement of the two sections with respect to each other but which inhibit or substantially prevent rotational movement of the first section with respect to the second section. The inter-engaging formations may include inter-engaging teeth and corresponding recesses provided in pairs as part of the first and second sections of the fixing 1.

In some embodiments, the linear motion device 6 inhibits or substantially prevents lateral movement (i.e. movement in a direction perpendicular to the central axis and/or the axis of linear movement permitted by the linear motion device 6) of the first and second sections of the fixing 1 with respect to each other.

In some embodiments, the fixing 1 may have a single (i.e. just one and only one) back member 13 which extends in a single (i.e. just one and only one) direction with respect to the neck member 12.

In some embodiments, the fixing 1 may be generally L-shaped.

As described above, the head member 11, neck member 12, and back member 13 are rigidly coupled to each other (and/or integrally formed). In some embodiments, such as described in relation to figure 12, for example, the rigid coupling may substantially prevent rotational movement of the head member 11 with respect to the back member 13 but does not prevent linear movement of the head member 11 with respect to the back member 13 (which are still rigidly coupled with respect to each other). In some embodiments, however, the rigid coupling does not provide for movement between the head member 11 and the back member 13. In such embodiments, the coupling may be such that the head member 11 and back member 13 are fixed (i.e. immoveable) with respect to each other (and may also be fixed (i.e. immoveable) in relation to the neck member 12).

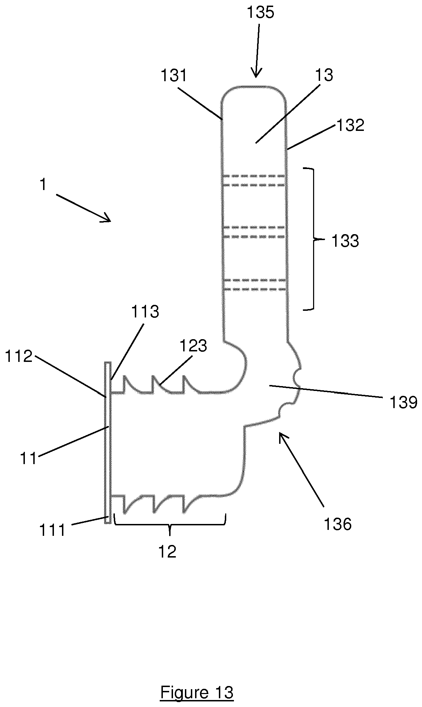

In some embodiments, such as described in relation to figure 13, the back member 13 may further comprise a curved portion 139 at or towards the proximal end 136 of back member 13. The curved portion 139 may connect the rest of the back member 13 (which may be a linear or elongate portion thereof) and the neck member 12. A portion of the curved portion 139 may bow outwardly with respect to the back member 13 and neck member 12 - e.g. extending away from a plane of the back member 13 in a direction away from the neck member 12. The curved portion 139 may be configured to resist rotational movement of the back member 13 away from the panel 2 as the screw 3 or other attachment element is driven into the back member 13. The curved portion 139 may include one or more (e.g. two) linear recesses across a width thereof. In some embodiments, therefore, the most rearwardly part of the fixing 1 (relative to the head member 11) may be a part of the curved portion 139.

The width of the curved portion 139 may be substantially equal to or less than the remainder of the back member 13.

The curved portion 139 may ease the insertion of the fixing 1 into the hole 5 of the panel 2 and may make it easier to secure the screw 3 or other attachment element.

The neck member 12 may, in some embodiments, comprise one or more ribs 123 (e.g. three ribs). The one or more ribs 123 may, at least, partly surround a circumference or perimeter of the neck member 12.

The one or more ribs 123 may help to secure the fixing 1 within the panel 2 until the screw 3 or other attachment element has been received by the back member 13. As such, the shape of the one or more ribs 123 may be configured to allow for easy insertion of the fixing 1 into the hole 5 of the panel 2, but resist removal from the hole 5 in the panel 2. Furthermore, the radius or width of the one or more ribs 123 may be greater than or equal to that of the hole 5 in the panel 2.

In some embodiments, the one or more ribs 123 may be partially deformable and are each configured to deform to fit through the hole 5 in the panel 2. In some embodiments, the one or more ribs 123 may be otherwise movable between a first position to allow entry into the hole 5 in the panel 2 and a second position with respect to the neck member 12 to resist removal from the hole 5 in the panel 2. A shape profile of the one or more ribs 123 may be triangular, frustoconical or trochoid, for example. The one or more ribs 123 may be barb-like.

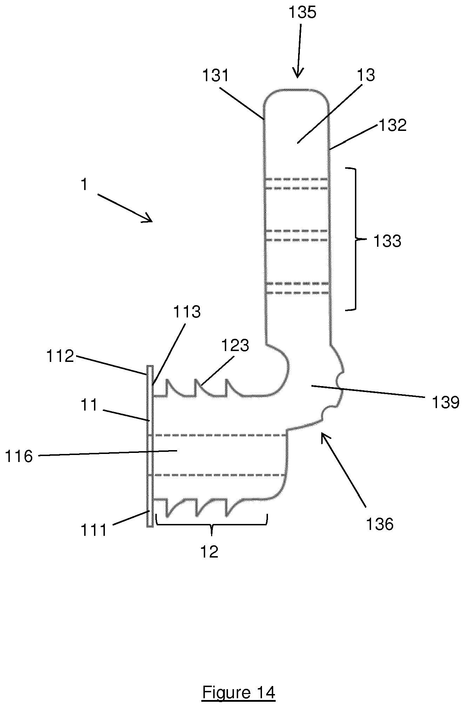

Figure 14 shows an example that, in some embodiments, the head member 11 and/or neck member 12 may define a marking aperture 116. The marking aperture 116 may extend from the outer surface 112 of the head member 11 through an entire depth of the neck member 12. In some embodiments, the marking aperture 116 may be used to aid marking a point on the panel 2. The marked point may coincide with a user desired position of the fixing 1 relative to the panel 2. In some embodiments, the reference point may act to inform a user where to fabricate (e.g. drill) the hole 5. This may be in the form of marking a relative centre point of the outer surface 112 area of the head member 11 on the panel 2. The marking aperture 116 may, therefore, be configured to receive at least part of a marking tool or implement.

An example of a method to mark a point on the panel 2 may be to position the outer surface 112 of the head member 11 adjacent the panel 2 and insert the marking tool though the marking aperture 116 such that a mark is produced on the panel 2 by the marking tool. Examples of marking tools may include a pencil, pen, or an indentation tool and the like. Likewise, it will also be appreciated that the second face 132 of the back member 13 may also be positioned adjacent the panel 2 and a mark produced on the panel 2 by inserting the marking tool through the marking aperture 116 in the head member 11 and/or neck member 12.

When used in this specification and claims, the terms "comprises" and "comprising" and variations thereof mean that the specified features, steps or integers are included. The terms are not to be interpreted to exclude the presence of other features, steps or components.

## Claims

1. A fixing (1) for attaching an object (4) to a panel (2), the fixing (1) comprising:
a head member (11) configured to be located on a first side of the panel (2);
a back member (13) configured to be located on a second side of the panel (2) and to receive at least part of an attachment element (3); and
a neck member (12) connecting the head member (11) and the back member (13), wherein the head member (11), neck member (12), and back member (13) are rigidly coupled together and a part of the back member (13) extends radially outwardly with respect to the head member (11), such that the back member (13) is locatable on the second side of the panel (2) by manipulation of the rigidly coupled head member (11), neck member (12) and back member (13), **characterised in that** the back member (13) defines a plurality of apertures (133).

2. A fixing (1) according to claim 1, wherein:
the head member (11) has a central axis which passes through at least part of the neck member (12) and the part of the back member (13) which extends radially outwardly with respect to the head member (11) extends radially outwardly with respect to the central axis.

3. A fixing (1) according to claim 2, wherein the central axis passes through at least part of the back member (13).

4. A fixing (1) according to any preceding claim, wherein:
the head member (11) is a disc-shaped member; AND/OR
the head member (11) includes a visual indicator (114) which indicates the direction of extension of the part of the back member (13); AND/OR
the neck member (12) includes an angled surface on a part which opposes the direction of extension of the back member (13); AND/OR
the back member (13) includes an angled surface on a part which is adjacent the neck member (12).

5. A fixing (1) according to any preceding claim, wherein each aperture (133) extends through the back member (13) along a respective axis which is generally parallel to a central axis of the head member (11).

6. A fixing (1) according to any preceding claim, wherein the apertures (133) are defined in an array including one or more columns of apertures (133) .

7. A fixing (1) according to any preceding claim, wherein the apertures (133) form a lattice or honeycomb-like structure.

8. A fixing (1) according to any preceding claim, wherein the neck member (12) includes one or more support ribs (122).

9. A fixing (1) according to any preceding claim, further including a linear motion device (6) which is configured to provide linear movement between the head member (11) and the back member (13).

10. A fixing (1) according to any preceding claim, wherein the back member (13) includes a curved portion (139) connecting the rest of the back member (13) to the neck member (12).

11. A kit including a fixing (1) according to any preceding claim and the attachment element (3).

12. A kit according to claim 11, wherein the attachment element (3) is a threaded attachment element (3), and optionally further including:
a drill bit for use in creating a hole in the panel (2) to receive the fixing (1); and/or the object (4).

13. A method including:
inserting the fixing (1) of any of claims 1 to 10 into a hole (5) defined by the panel (2); and
rotating the fixing (1) to bring a face of the back member (13) towards a surface of the panel (2) and to bring the head member (11) to cover the hole (5) at least partially, and optionally further including driving the attachment element (3) into the back member (13).

## Patentansprüche

1. Befestigung (1) zum Anbringen eines Gegenstands (4) an einer Platte (2), wobei die Befestigung (1) umfasst:
ein Kopfelement (11), das dafür konfiguriert ist, auf einer ersten Seite der Platte (2) befindlich zu sein;
ein Rückenelement (13), das dafür konfiguriert ist, auf einer zweiten Seite der Platte (2) befindlich zu sein und mindestens einen Teil eines Anbringungselements (3) aufzunehmen; und
ein Halselement (12) zum Verbinden des Kopfelements (11) und des Rückenelements (13), wobei das Kopfelement (11), Halselement (12) und Rückenelement (13) starr miteinander verbunden sind und sich ein Teil des Rückenelements (13) mit Bezug auf das Kopfelement (11) radial nach außen erstreckt, sodass das Rückenelement (13) durch Manipulation des starr verbundenen Kopfelements (11), Halselements (12) und Rückenelements (13) auf der zweiten Seite der Platte (2) anordenbar ist, **dadurch gekennzeichnet, dass**
das Rückenelement (13) eine Vielzahl von Durchlässen (133) definiert.

2. Befestigung (1) nach Anspruch 1, wobei:
das Kopfelement (11) eine zentrale Achse aufweist, die durch mindestens einen Teil des Halselements verläuft (12), und der Teil des Rückenelements (13), der sich mit Bezug auf das Kopfelement (11) radial nach außen erstreckt, sich mit Bezug auf die zentrale Achse radial nach außen erstreckt.

3. Befestigung (1) nach Anspruch 2, wobei die zentrale Achse durch mindestens einen Teil des Rückenelements (13) verläuft.

4. Befestigung (1) nach einem vorhergehenden Anspruch, wobei:
das Kopfelement (11) ein scheibenförmiges Element ist; UND/ODER
das Kopfelement (11) eine Sichtanzeige (114) beinhaltet, die die Erstreckungsrichtung des Teils des Rückenelements (13) anzeigt; UND/ODER
das Halselement (12) eine abgewinkelte Fläche auf einem Teil, der der Erstreckungsrichtung des Rückenelements (13) entgegengesetzt ist, beinhaltet; UND/ODER
das Rückenelement (13) eine abgewinkelte Fläche auf einem Teil, der neben dem Halselement (12) ist, beinhaltet.

5. Befestigung (1) nach einem vorhergehenden Anspruch, wobei sich jeder Durchlass (133) durch das Rückenelement (13) hindurch entlang einer jeweiligen Achse, die im Allgemeinen parallel zu einer zentralen Achse des Kopfelements (11) ist, erstreckt.

6. Befestigung (1) nach einem vorhergehenden Anspruch, wobei die Durchlässe (133) in einer Anordnung, die eine oder mehrere Spalten von Durchlässen (133) beinhaltet, definiert sind.

7. Befestigung (1) nach einem vorhergehenden Anspruch, wobei die Durchlässe (133) eine gitter- oder wabenartige Struktur bilden.

8. Befestigung (1) nach einem vorhergehenden Anspruch, wobei das Halselement (12)
eine oder mehrere Stützrippen (122) beinhaltet.

9. Befestigung (1) nach einem vorhergehenden Anspruch, ferner beinhaltend eine Linearbewegungsvorrichtung (6), die dafür konfiguriert ist, für Linearbewegung zwischen dem Kopfelement (11) und dem Rückenelement (13) zu sorgen.

10. Befestigung (1) nach einem vorhergehenden Anspruch, wobei das Rückenelement (13) einen gekrümmten Abschnitt (139) beinhaltet, der den Rest des Rückenelements (13) mit dem Halselement (12) verbindet.

11. Kit, beinhaltend eine Befestigung (1) nach einem vorhergehenden Anspruch und das Anbringungselement (3).

12. Kit nach Anspruch 11, wobei das Anbringungselement (3) ein Gewindebefestigungselement (3) ist, und wahlweise ferner beinhaltend:
einen Bohraufsatz zur Verwendung beim Herstellen eines Lochs in der Platte (2) zum Aufnehmen der Befestigung (1); und/oder des Gegenstands (4).

13. Verfahren, beinhaltend:
Einführen der Befestigung (1) nach einem der Ansprüche 1 bis 10 in ein von der Platte (2) definiertes Loch (5); und
Drehen der Befestigung (1), um eine Fläche des Rückenelements (13) hin zu einer Oberfläche der Platte (2) zu bringen, und um das Kopfelement (11) dazu zu bringen, das Loch (5) mindestens teilweise abzudecken, und wahlweise ferner beinhaltend das Eintreiben des Anbringungselements (3) in das Rückenelement (13).

## Revendications

1. Une fixation (1) pour attacher un objet (4) à un panneau (2), la fixation (1) comprenant :
un élément de tête (11) configuré pour être situé sur un premier côté du panneau (2) ;
un élément de dos (13) configuré pour être situé sur un deuxième côté du panneau (2) et pour recevoir au moins une partie d'un organe d'attache (3) ; et
un élément de cou (12) reliant l'élément de tête (11) et l'élément de dos (13), l'élément de tête (11), l'élément de cou (12), et l'élément de dos (13) étant couplés ensemble de manière rigide et une partie de l'élément de dos (13) s'étendant radialement vers l'extérieur par rapport à l'élément de tête (11), de sorte que l'élément de dos (13) peut être situé sur le deuxième côté du panneau (2) par la manipulation de l'élément de tête (11), l'élément de cou (12) et l'élément de dos (13) couplés de manière rigide,
**caractérisée en ce que**
l'élément de dos (13) définit une pluralité d'ouvertures (133).

2. Une fixation (1) selon la revendication 1, dans laquelle :
l'élément de tête (11) a un axe central qui traverse au moins une partie de l'élément de cou (12) et la partie de l'élément de dos (13) qui s'étend radialement vers l'extérieur par rapport à l'élément de tête (11) s'étend radialement vers l'extérieur par rapport à l'axe central.

3. Une fixation (1) selon la revendication 2, dans laquelle l'axe central traverse au moins une partie de l'élément de dos (13).

4. Une fixation (1) selon n'importe quelle revendication précédente, dans laquelle :
l'élément de tête (11) est un élément en forme de disque ; ET/OU
l'élément de tête (11) comprend un indicateur visuel (114) qui indique la direction d'extension de la partie de l'élément de dos (13) ; ET/OU
l'élément de cou (12) comprend une surface inclinée sur une partie opposée à la direction d'extension de l'élément de dos (13) ; ET/OU
l'élément de dos (13) comprend une surface inclinée sur une partie adjacente à l'élément de cou (12).

5. Une fixation (1) selon n'importe quelle revendication précédente, dans laquelle chaque ouverture (133) s'étend à travers l'élément de dos (13) le long d'un axe respectif qui est généralement parallèle à un axe central de l'élément de tête (11).

6. Une fixation (1) selon n'importe quelle revendication précédente, dans laquelle les ouvertures (133) sont définies dans un réseau comprenant une ou plusieurs colonnes d'ouvertures (133).

7. Une fixation (1) selon n'importe quelle revendication précédente, dans laquelle les ouvertures (133) forment une structure en treillis ou nid d'abeilles.

8. Une fixation (1) selon n'importe quelle revendication précédente, dans laquelle l'élément de cou comprend une ou plusieurs nervures de support (122).

9. Une fixation (1) selon n'importe quelle revendication précédente, comprenant en sus un dispositif de mouvement linéaire (6) configuré pour assurer un mouvement linéaire entre l'élément de tête (11) et l'élément de dos (13).

10. Une fixation (1) selon n'importe quelle revendication précédente, dans laquelle l'élément de dos (13) comprend une partie courbe (139) reliant le reste de l'élément de dos à l'élément de cou (12).

11. Un kit comprenant une fixation (1) selon n'importe quelle revendication précédente, et l'organe d'attache (3).

12. Un kit selon la revendication 11, dans lequel l'organe d'attache (3) est un organe d'attache fileté (3), et éventuellement comprenant en sus :
un trépan servant à faire un trou dans le panneau (2) pour recevoir la fixation (1) ;
ET/OU l'objet (4).

13. Un procédé comprenant les étapes consistant à :
insérer la fixation (1) de n'importe quelle revendication 1 à 10 dans un trou (5) défini par le panneau (2) ; et
faire tourner la fixation (1) pour amener une face de l'élément de dos (13) vers une surface du panneau (2) et pour amener l'élément de tête (11) à couvrir le trou (5) au moins partiellement, et éventuellement comprenant en sus l'étape consistant à enfoncer l'organe d'attache (3) dans l'élément de dos (13).
